Europäisches Patentamt

European Patent Office    (11) Publication number: **0 049 058**

Office européen des brevets    **A1**

(12) **EUROPEAN PATENT APPLICATION**

(21) Application number: **81304064.9**

(22) Date of filing: **07.09.81**

(51) Int. Cl.³: **F 16 D 13/71, F 16 D 13/50**

(30) Priority: **18.09.80 IT 2473780**

(43) Date of publication of application: **07.04.82**
**Bulletin 82/14**

(84) Designated Contracting States: **BE DE FR GB SE**

(71) Applicant: **AUTOMOTIVE PRODUCTS LIMITED, Tachbrook Road, Leamington Spa Warwickshire CV31 3ER (GB)**

(72) Inventor: **Cucinotta, Luigi, Via Medi 4, Castelbellino Ancona (IT)**

(54) **Friction clutch cover assemblies.**

(57) A friction clutch cover assembly particularly for use in automobiles, comprising an annular cover (12), a pressure plate (13) and a diaphragm spring (14) located between the cover and the pressure plate.

The spring (14) is secured to the cover (12) by angularly spaced tabs (15) which pass through apertures (16) in the spring, and the spring is pivoted for movement relative to the cover on an array of angularly spaced ribs (19) on the face of the cover adjacent the spring and located between the tabs.

"Friction Clutch Cover Assemblies"

The invention relates to friction cover assemblies for diaphragm spring clutches and in particular but not exclusively to such assemblies which are suitable for use in motor vehicle clutches.

A typical diaphragm spring motor vehicle friction clutch cover assembly comprises an annular cover, a pressure plate arranged on one side of the cover and co-axial therewith, and a co-axial diaphragm spring located between the cover and the plate. The pressure plate is made rotationally fast with the cover but is secured thereto by means that allows the pressure plate to move axially relative to the cover. In use the cover is fastened to the vehicle flywheel and the diaphragm spring urges the pressure plate towards the flywheel so as to grip a driven plate therebetween.

A typical diaphragm spring is frusto-conical in shape and comprises continuous outer annular portions with a plurality of inwardly projecting fingers. The outer portion of the spring urges the pressure plate towards the flywheel and the clutch driven plate is released by exerting a release load on the radially inner ends of the fingers so as to cause the outer annular portion to move so that the pressure plate ho longer clamps the driven plate.

In our earlier British Patent Specification No. 1,347,485 we have described a clutch cover assembly in which the diaphragm spring is attached to the cover by tabs integral with the cover and which pass through apertures at the base of the spring fingers to clamp against the side of the spring away from the cover. In order to facilitate the movement of the diaphragm spring, one co-axial wire fulcrum ring is located between the cover and the spring and a second ring is clamped between the tabs and the side of the spring away from the cover to provide a pivot for the movement of the spring.

It is the object of the present invention to provide a clutch cover assembly of the type described in the above patent specification and in which the fulcrum ring between the cover and the spring is eliminated.

Accordingly there is provided a friction clutch cover assembly comprising an annular cover, a co-axial pressure plate on one side of the cover, and a co-axial diaphragm spring located between the cover and the pressure plate and pivoted at an annular fulcrum for movement relative to the cover, said spring being secured to the cover by angularly spaced tabs integral with the cover and which pass through apertures in the spring, wherein the spring is pivoted to the cover on an array of angularly spaced ribs on the face of the cover adjacent the spring and located between tabs.

Preferably the cover has a co-axial wire ring located on the side of the spring away from the cover and it is located by the ends of the ring engaging in a space formed by omission of one of the tabs.

The invention will be described by way of example and with reference to the following drawings in which:-

Fig. 1 is a plan view of a clutch cover assembly according to this invention;

Fig. 2 is a section on the line II-II of Fig. 1; and

Fig. 3 is a section on the line III-III of Fig. 1.

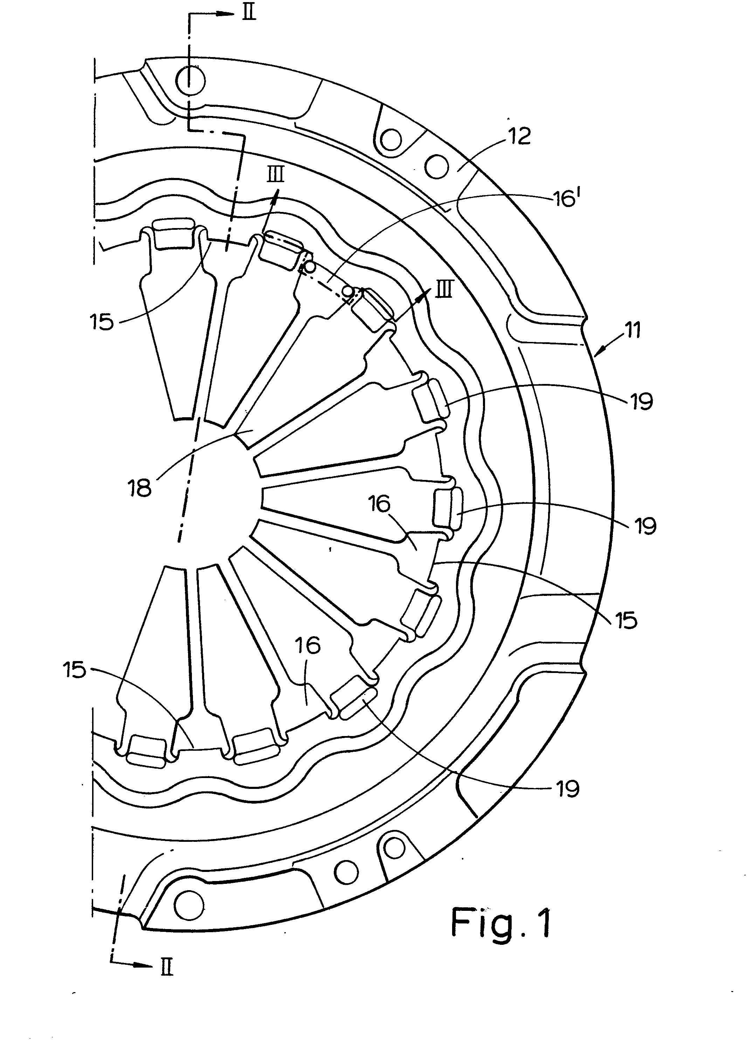

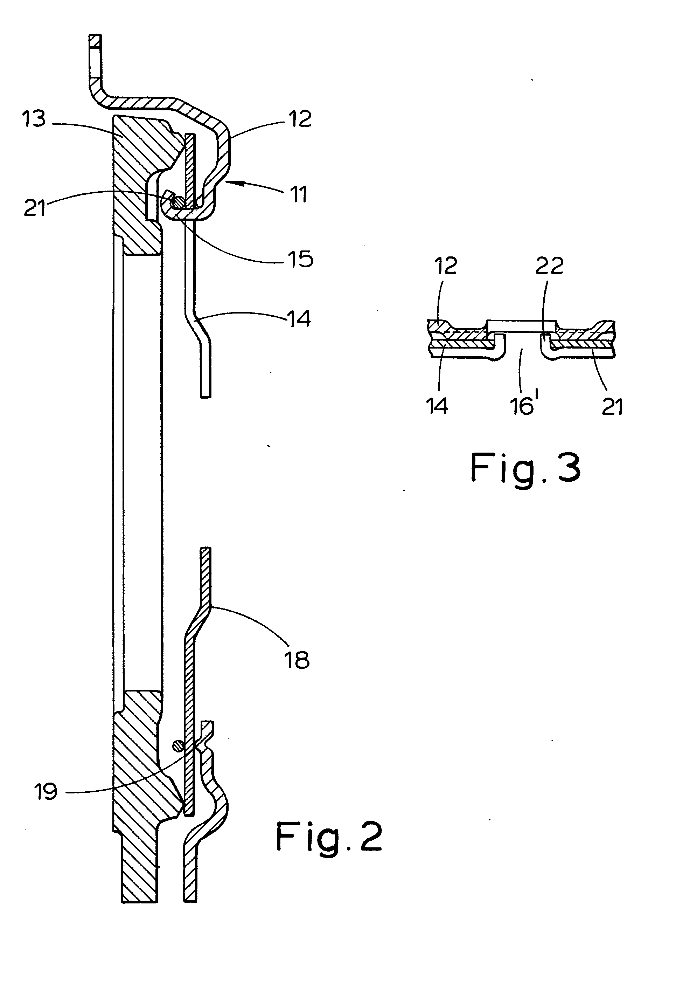

With reference to Figs. 1 to 3 a motor vehicle friction clutch cover assembly 11 comprises an annular cover 12, a co-axial pressure plate 13 located to one side of the cover 12, and a co-axial diaphragm spring 14 located between the cover 12 and the pressure plate 13. The pressure plate 13 is made rotationally fast with the cover by drive straps (not shown) that allow the plate 13 to move axially relative to the cover. The spring 14 is secured to the cover by an array of angularly spaced tabs 15, (only three of which are labelled) integral with the radially inner margin of the cover 12, and which pass through apertures 16 in the spring 14 located at the base of the inwardly projecting spring fingers 18.

The spring is pivoted for movement relative to the cover during the operation of the clutch, by a circular array of angularly spaced circumferentially aligned ribs 19 on the face of the cover adjacent the spring, and by a split fulcrum ring 21 held by the tab 15 against the face of the spring away from the cover. The ribs 19 are pressed into the sheet steel cover and are each located between adjacent pairs of tabs 15. The fulcrum ring 21 has a pair of bent-up ends 22 that locate the fulcrum ring 21 by the ends of the tabs engaging in an aperture 16'

in the spring 15. The aperture 16' is made suitable for this purpose by the omission of a tab 15 from the cover so that one of the apertures 16 in the spring is left free of a tab after securing the spring 14 to the cover 12. The ends 22 of the ring 21 are then engaged in said aperture 16'.

Claims

1.      A friction clutch cover assembly comprising an annular cover (12), a co-axial pressure plate (13) on one side of the cover, and a co-axial diaphragm spring (14) located between the cover (12) and the pressure plate (13) and pivoted at an annular fulcrum (19) and (21) for movement relative to the cover, said spring (14) being secured to the cover by angularly spaced tabs (15) integral with the cover and which pass through apertures (16) in the spring, characterised in that the spring (14) is pivoted to the cover (12) on an array of angularly spaced ribs (19) located on the face of the cover adjacent the spring and between tabs (15).

2.      An assembly as located in Claim 1, characterised in that a co-axial split fulcrum ring (21) is held by the tabs (15) against a face of the spring and is located by the ends (22) of the ring (21) engaging in a space (16⁴) formed by omission of one of the tabs.

3.      An assembly as claimed in Claim 2, characterised in that the ends (22) of the ring (21) engage only in an aperture (16⁴) in the spring (14).

4.      An assembly as claimed in any one of Claims 1 to 3, characterised in that the cover (12) is a sheet metal pressing and the ribs (19) are press formed into the cover.

0049058

Fig.1

0049058

Fig.2

Fig.3

# EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | FR - A - 2 171 789 (GKN) <br><br> * page 5, lines 4-21; figure 2 * <br><br> -- | 1,2,4 | F 16 D 13/71 <br> F 16 D 13/50 |
| | US - A - 3 978 955 (TAMIO NAGANO) <br><br> * column 4, lines 8-22; column 4, lines 35-37; figures 1,2 * <br><br> -- | 1,2,4 | |
| | GB - A - 1 003 340 (AUTOMOTIVE) <br><br> * claim 1; figures 1,2 * <br><br> -- | 2,3 | TECHNICAL FIELDS SEARCHED (Int. Cl.³) <br><br> F 16 D |
| A | GB - A - 865 948 (FORD) | | |
| A | GB - A - 1 126 911 (AUTOMOTIVE) <br><br> ------------ | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> THE HAGUE | Date of completion of the search <br> 23-12-1981 | Examiner <br> ORTHLIEB | |

EPO Form 1503.1  06.78